# EUROPEAN PATENT APPLICATION

(11) **EP 4 818 759 A1**
(43) Date of publication of application: **07.10.2026**
(21) Application number: 26164074.2
(22) Date of filing: 11.03.2026
(51) Int. Cl.: G01S 19/29

(54) **GNSS RECEIVER WITH CARRIER PHASE TRACKING, METHOD FOR PERFORMING A CARRIER PHASE TRACKING THEREIN AND COMPUTER PROGRAM PRODUCT**

(30) Priority: 31.03.2025 IT 202500006825
(71) Applicant: STMicroelectronics International N.V., 1228 Plan-les-Ouates, Geneva (CH)
(72) Inventor: DI GRAZIA, Domenico, I-81030 Cesa (Caserta) (IT); CRASTA, Salvatore, I-80126 Napoli (IT); PISONI, Fabio, I-20038 Busto Garolfo (Milano) (IT)
(74) Representative: Buzzi, Notaro & Antonielli d'Oulx S.p.A.

(57) **Abstract**

A GNSS receiver receiving at least a satellite signal (s₀,...,s_{NS-1}) transmitted from a satellite (S₀,...,S_{NS-1}), comprising at least a tracking channel (TRK) comprising a carrier phase tracking loop (40) which is configured to perform a carrier phase (CP) calculation on the basis of accumulated coherent GNSS signal components (I,Q) derived from said at least a satellite signal (s₀,...,s_{NS-1}) by a phase computation module (46) configured to compute said carrier phase (CP) and to receive an information (PP, IP) on the polarity of said accumulated coherent GNSS signal components (I,Q), adjusting the value of said carrier phase (CP) as a function of said information on the polarity (PP, IP) of said accumulated coherent GNSS signal components (I,Q),
wherein said GNSS receiver comprises a circuit arrangement (41, 42, 43, 44, 45) configured to obtain a synthetic pilot signal (x(n)) at a first frequency and with a first period from said accumulated coherent GNSS signal components (I,Q), comprising a module (41) configured for obtaining a bit estimate (*ŝ*(*m*)) of said accumulated coherent GNSS signal components (I,Q) at a second frequency higher than said first frequency and corresponding to the frequency of said accumulated coherent GNSS signal components (I,Q), and
comprising a circuit (30) configured to resolve Carrier Phase observable Half Cycle Ambiguity resolution on said synthetic pilot signal (x(n))
comprising a module (10) operating on the synthetic pilot signal (x(n)) configured to estimate a pilot polarity (PP), a module (20) operating on said bit estimate (*ŝ*(*m*)) configured to estimate a data polarity (DP) from said bit estimate (*ŝ*(*m*)),
a logic module (32), in particular a XOR implementing logic module, configure to check if said pilot polarity (PP) and data polarity (DP) are equal or different and outputting a corresponding check result (IP) as polarity information (IP) to said phase computation module (46),
said phase computation module (46) being configured to perform the adjustment of a computed carrier phase value on the basis of said check result (IP).

## Description

### Technical field

Embodiments of the present disclosure relate to GNSS receivers.

The present disclosure refers in particular to techniques for performing carrier phase tracking resolving the HCA ambiguity.

### Background

In several applications and use cases (automotive, consumer fields) a Position Sensor (PS) is required. It is an electronic device composed by a GNSS receiver and a processor aiming to provide accurate position information to user applications.

A navigation receiver operates by down converting to quasi-baseband the input signal received from the satellites, which is transmitted at L band (1-2 GHz), using a local oscillator to step down the input frequency and allow a baseband digital management of the satellite information.

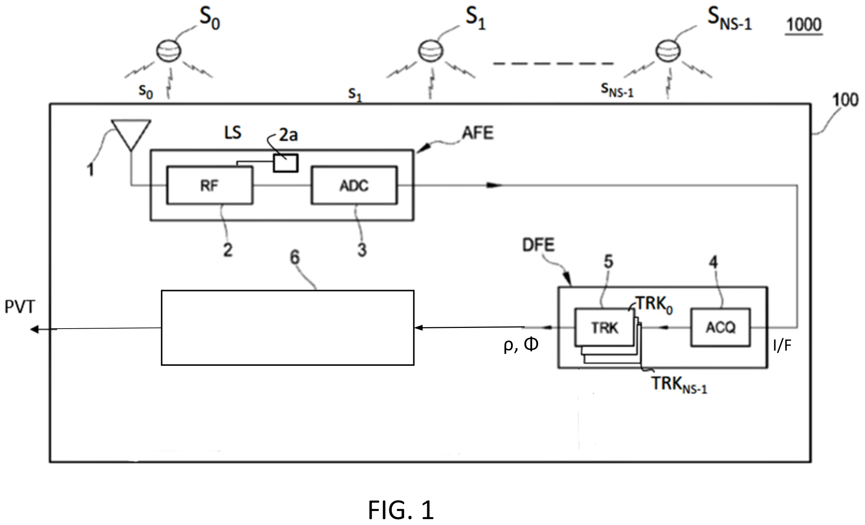

With reference to Figure 1, which diagrammatically shows a GNSS (Global Navigation Satellite System) system 1000 (such as, for example, Global Positioning System (GPS), Global'naya Navigatsionnaya Sputnikovaya Sistema (GLONASS), Galileo System, BeiDou System or other types of satellite-based positioning systems) such global satellite positioning system 1000 comprises a constellation of a number NS of satellites S₁-S_{NS} and at least a receiving apparatus 100. The satellite signals used in the GNSS (Global Navigation Satellite System) are of the CDMA-type (Code Division Multiple Access). The satellite signals reception at the receiving apparatus 100 is implemented through the following, sequentially performed, standard steps: analog filtering, frequency conversion and digitization, acquisition, tracking, decoding and positioning.

The receiving apparatus 100 comprises an antenna 1, an analog receiving module AFE (Analog Front End), provided with a radiofrequency (RF) stage 2, and an analog-digital converter 3 (ADC), which can be implemented by hardware modules.

Further, the receiving apparatus 100 comprises a digital processing module DFE (Digital Front End), including an acquisition module 4 (ACQ), and a tracking module 5 (TRK).

Moreover, the receiving apparatus 100 is provided with a PVT computation block, which computes on the basis of pseudo-ranges ρ and carrier phase Φ computed by the tracking channel 5 for each respective satellite signal the receiver computed Position, Velocity and Time, PVT of the receiving apparatus 100.

The tracking channel 5, which can be implemented by hardware, is in general configured to calculate pseudo-ranges ρ and carrier phase Φ.

In various embodiments, acquisition module 4 and tracking module 5 can be implemented by hardware or can also be implemented by a hardware and software combination.

The receiving apparatus 100 is provided with a central processing unit, memories (mass memory and/or working storage) and respective interfaces (not shown in figures), comprising a microprocessor or microcontroller, for running the software resident in it.

The schematics of figure 1 applies in general to GPS technology, but also to other satellite positioning systems.

Thus, when the receiving apparatus 100 operates, the antenna 1 receives a plurality of signals s₀,...,s_{NS}-₁ from one or more satellites S₀-S_{NS-1} of the constellation of satellites operating in system 1000. For example, these signals can be modulated on a carrier having a frequency, in the range of the GHz, depending on the standard and signals. Particularly, each received signal transports a pseudo-random code and a message for the data communication.

The pseudo-random code, by way of example a CA code, is used for distinguishing a satellite from another, and enables the receiving apparatus 100 to measure the time instant at which a signal has been transmitted by a corresponding satellite. Pseudo-random code is implemented by a sequence of pulses, called chips.

The radio frequency stage 2 operates on the signals received by antenna 1 (of the analog type) and converts them to the base band or to an intermediate frequency. Analog-digital converter 3 converts the intermediate frequency signals to corresponding digital signals. The radio-frequency stage 2 operates the conversion at an intermediate frequency using the frequency of a local signal LS which may be supplied by a Temperature Compensated Crystal Oscillator (TCXO) 2a.

The acquisition block 4 identifies in the digital signals originated by the analog-digital converter 3 the satellites in visibility, testing their presence by trying to match their transmitted PRN (Pseudo Random Noise) code sequence, i.e., the CA code, with a corresponding local replica and when a peak confirmation is found it provides the initial GNSS information, i.e., code/frequency information to an elementary Intermediate Frequency tracking correlation block, i.e., block 5.

The tracking module 5 has a plurality of tracking channels, indicated by a channel index k from 0 to NS-1, in particular indicated as TRK₀...TRK_{NS-1} and each is allocated to a different satellite of the constellation. Specifically, the tracking module 5 is configured to operate as tracking loop, which can be designed to follow either the phase of the incoming signal - using Phase Lock Loops (PLL), or the Doppler frequency of the incoming signal using Frequency Lock Loops (FLL). Phase noise, residual fluctuation of the tracking process, is intended as a quality metric and it is adopted to identify the goodness of the tracking itself at a given carrier to noise C/N₀.

The tracking module 5 is thus configured to supply data, pseudo-ranges ρ and carrier phase Φ (or CP) data, to the PVT block 6 which calculates subsequently the position velocity time PVT.

It is noted that the navigation processing operation may be in general defined in more general schematic as the operation following the tracking channels in module 5, and may include sometimes also the pseudo-range measurements calculation.

As mentioned, the tracking module 5 includes a plurality of channels, i.e., tracking correlation blocks which are usually let working in parallel each tuned on a different satellite PRN code and frequency, among the ones previously identified by the acquisition block 4, with the goal to confirm or eventually discard the acquisition hypothesis for every of them. For the confirmed satellites, after a startup refinement of the code and frequency initially provided by the acquisition block, the stable locked tracking phase starts. It consists into tightly following both the frequency offset (velocity) and the code phase (distance) of the satellite vehicle being analyzed and to demodulate the position and time information embedded in its bit stream. This information is then provided for instance to a Kalman Filter to triangulate the receiver position.

The tracking channel are thus responsible for maintaining synchronization with a satellite signal by continuously tracking both the code phase (pseudorandom noise or PRN code) and the carrier phase. This is accomplished using a code Discriminator, which tracks the PRN code phase to maintain alignment with the incoming satellite signal and a carrier phase discriminator, which tracks the phase of the carrier wave to ensure precise Doppler and phase alignment.

Both discriminators work within a tracking loop.

The received GNSS signal from a satellite, either down-converted to an intermediate frequency or directly to baseband, contains both the PRN code (spreading code) and the carrier frequency (which includes Doppler shifts due to motion). A replica PRN code and a local carrier signal using a Numerically Controlled Oscillator (NCO) are generated which are used to compare against the received signal.

The received signal is then correlated with the locally generated PRN code and carrier wave. This generates I (In-phase) and Q (Quadrature) components, which serve as inputs to the tracking loops.

The Code Discriminator ensures that the receiver-generated PRN code remains aligned with the received satellite signal PRN code, using Early, Prompt and Later correlators operating on Early, Prompt and Later versions of the locally generated PRN code, obtaining respective Early, Prompt and Later I,Q components. Early and Late versions of the locally generated PRN code are offset slightly from the Prompt code. A code phase error is computed on the basis of Early, Prompt and Later I,Q components. A loop filter, e.g. DLL, processes the discriminator output and adjusts the code NCO to correct the timing.

The Carrier Phase Discriminator, which ensures that the receiver 100 locally generated carrier signal stays in phase lock with the received carrier wave.

Regarding the carrier phase loop, the received signal is mixed with the locally generated carrier signal to obtain I and Q components (usually a cosine and sine of the differences of phase of the received signal and of the locally generated carrier signal are used), which are prompt, or punctual, i.e., not Early or Delayed. Then such I, Q components are used by the phase discriminator to compute a phase error Φ (e.g. by calculating an arctangent of Q/I). This provides a measure of the carrier phase error. A PLL loop filter refines the phase error and adjusts the carrier NCO of the locally generated carrier signal to maintain phase lock.

The Carrier Phase Discriminator tracks Doppler shifts for precise velocity estimation. However enables also carrier phase positioning techniques like RTK (Real-Time Kinematic) and PPP (Precise Point Positioning). It provides higher accuracy compared to code-based tracking.

GNSS (Global Navigation Satellite System) Carrier Phase is thus the measurement used by modern GNSS Receiver for Precise Positioning (PPP) application, with centimeters target accuracy. Thus, here is in particular made reference to Carrier Phase Observable production for Modern Correction GNSS Signals, such as Galileo E6, BDS3 B2b-PPP. Its availability is for instance a pre-conditional step for derivation of Carrier Phase on Synthetic Meta-Signal ACEBOC in BeiDou systems.

Under this view, Modern Correction Signals (Galileo E6, BeiDou B2b-PPP) have a symbol rate that is many times faster (20x) than the legacy GPS and do not allow exploiting coherent accumulation over multiple milliseconds to achieve expected performances for measurement usage in PPP application in terms of tracking sensitivity and Carrier Phase Observable availability.

Carrier Phase is derived using a PLL and standard data packer, i.e., circuit to resolve polarity sign, i.e. to resolve Half-Cycle Ambiguity (HCA) of a GNSS carrier phase. A solution along this line is described in EP 4 163 676 A1.

Resolving the half-cycle ambiguity typically involves waiting for the occurrence of a preamble (a short bit sequence transmitted at fixed intervals, the content of which is known in advance) and comparing it with the decoded sequence. In case of a sign inversion, i.e., inverted polarity, the receiver adjusts its carrier phase by 180°. In case of a match, the carrier phase is confirmed and does not need to change. This process must restart after each loss of tracking (i.e. after each signal interruption).

Other prior art solutions may include Half-cycle Ambiguity Resolution Method Designed for DBT Technique (AltBOC case) or non-coherent Processing of E6b Signals (use of DD PLL).

The known solutions present the drawback of Loss of Lock for Carrier Phase at Carrier to Noise densities, C/N0, higher than the one achievable with the proposed solution. This is also limiting the usage of B2B for Synthetic ACEBOC.

### Object and summary

In view of the above, it is an objective of the present disclosure to provide solutions which overcome one or more of the above drawbacks, providing GNSS receivers with increased capabilities of resolving the Half-Cycle Ambiguity.

According to one or more embodiments, one or more of the above objectives is achieved by means of a receiver having the features specifically set forth in the claims that follow.

One or more embodiments concern a related method and computer program product.

The claims are an integral part of the technical teaching of the disclosure provided herein.

As mentioned before, the present disclosure relates to a GNSS receiver receiving at least a satellite signal transmitted from a satellite, comprising at least a tracking channel comprising a carrier phase tracking loop which is configured to perform a carrier phase calculation on the basis of accumulated coherent GNSS signal components derived from said at least a satellite signal by a phase computation module configured to compute said carrier phase and to receive an information on the polarity of said accumulated coherent GNSS signal components, adjusting the value of said carrier phase as a function of said information on the polarity of said accumulated coherent GNSS signal components,
wherein said GNSS receiver comprises a circuit arrangement configured to obtain a synthetic pilot signal at a first frequency and with a first period from said accumulated coherent GNSS signal components, comprising a module configured for obtaining a bit estimate of said accumulated coherent GNSS signal components at a second frequency higher than said first frequency and corresponding to the frequency of said accumulated coherent GNSS signal components, and
comprising a circuit configured to resolve Carrier Phase observable Half Cycle Ambiguity resolution on said synthetic pilot signal,
comprising a module operating on the synthetic pilot signal configured to estimate a pilot polarity, a module operating on said bit estimate configured to estimate a data polarity from said bit estimate,
a logic module, in particular a XOR implementing logic module, configured to check if said pilot polarity and data polarity are equal or different and outputting a corresponding check result as polarity information to said phase computation module,
said phase computation module being configured to perform the adjustment of a computed carrier phase value on the basis of said check result.

In variant embodiments, it comprises a wipe-off module configured to perform a direct decision on the basis of a NRZ encoding of said bit estimate and said accumulated coherent GNSS signal components.

In variant embodiments, said module operating on the synthetic pilot signal configured to estimate a pilot polarity is configured to estimate a pilot polarity by a counter module configured to count the number of consecutive zero and ones over a time interval, in particular the first period and indicating direct or inverse polarity for the pilot polarity if the count exceeds a given threshold.

In variant embodiments, said module operating on the synthetic pilot signal configured to estimate a pilot polarity comprises a NRZ encoder configured to encode said pilot signal and a cumulative summation block configured to compute a cumulative sum of said NRZ encoded pilot signal and a module configured to compare the output of said cumulative summation block to said given threshold, in particular by calculating in parallel an absolute value and sign of said output of said cumulative summation block, comparing the absolute value to said given threshold and multiplying the comparison output by said sign of said output of said cumulative summation block.

In variant embodiments, said module operating on said bit estimate configured to estimate a data polarity from said bit estimate is configured to search an alignment of said bit estimate on known sequences of said at least a satellite signal, in particular a preamble sequence, and to detect a sign of such alignment, if found, which indicates direct or inverse polarity as data polarity.

In variant embodiments, said module operating on said bit estimate configured to estimate a data polarity from said bit estimate comprises a direct polarity verification block and inverse polarity verification block which are coupled in parallel to said bit estimate and receive each a sequence preamble of the at least a satellite signal, and verify the alignment of said bit estimate to said sequence preamble outputting a respective indication of detected alignment or not detected alignment, said module being configured on the basis of the outputs of the direct polarity verification block and inverse polarity verification block to indicate as output at least direct or inverse reference data polarity as data polarity.

In variant embodiments, it comprises coupled to the output of the wipe-off module a module configured to perform accumulation over the first period and a line estimator to obtain said pilot signal.

In variant embodiments, wherein said carrier phase tracking loop comprises a loop filter comprising a frequency discriminator, in particular said carrier phase tracking loop with said loop filter being a second order frequency loop.

In variant embodiments, said at least a satellite signal is a data only component signal, in particular a Galileo E6 or BeiDou B2b signal.

The present disclosure relates also to a method for performing a carrier phase tracking in a GNSS receiver according to any of the previous embodiments, comprising receiving at least a satellite signal transmitted from a satellite, performing a carrier phase calculation on the basis of accumulated coherent GNSS signal components derived from said at least a satellite signal by a performing phase discrimination and to adjust said carrier phase as a function of said information on the polarity of said accumulated coherent GNSS signal components,
further comprising obtaining a synthetic pilot signal at a first frequency from said accumulated coherent GNSS signal components, obtaining a bit estimate (*ŝ*(*m*) of said accumulated coherent GNSS signal components at a second frequency higher than said first frequency and corresponding to the frequency of said accumulated coherent GNSS signal components, and
resolving Carrier Phase observable Half Cycle Ambiguity resolution on said synthetic pilot signal by
estimating a pilot polarity,
estimating a data polarity from said bit estimate (*ŝ*(*m*),
checking if said pilot polarity and data polarity are equal or different and outputting a corresponding check result as polarity information,
performing the adjustment of a computed carrier phase value on the basis of said check result.

The present disclosure relates also to a computer program product directly loadable into the internal memory of a digital computer, comprising software code portions for performing the steps of the method of any of the previous embodiments.

Solutions as described herein facilitate obtaining a more effective HCA resolution, Carrier Phase Observable Availability at low Cn0s, in particular for data only signal such as E6 and B2b-PPP, and also, e.g., in B2B, ACEBOC, carrier phase CP derivation at low Cn0s.

### Brief description of the figures

Embodiments of the present disclosure will now be described with reference to the annexed drawings, which are provided purely by way of non-limiting example and in which:
- Figure 1 is a block diagram showing a GNSS (Global Navigation Satellite System) receiver;
- Figure 2 is a block diagram showing partially a tracking channel according to embodiments of the solution disclosed herein.
- Figure 3 is a block diagram showing a detail of the tracking channel according to embodiments of the solution disclosed herein.
- Figure 4 is a block diagram showing in more detail a module to obtain a pilot parity of the tracking channel according to embodiments of the solution disclosed herein.
- Figure 5 is a block diagram showing in more detail a module to obtain a data parity of the tracking channel according to embodiments of the solution disclosed herein.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

### Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

The solution here refers to a tracking channel of GNSS receiver which comprises a tracking loop to calculate a carrier phase from in-phase and quadrature GNSS signal components at input signal of the tracking channel, configured to compute a synthetic pilot signal from said in-phase and quadrature GNSS signal components by performing
an elementary symbol estimate on said in-phase and quadrature GNSS signal components obtaining a respective estimate,
a wipe off on the estimate
   then performing a procedure to resolve Carrier Phase observable Half Cycle Ambiguity resolution on said synthetic pilot signal, which comprises
a module operating on the synthetic pilot signal configured to estimate a pilot polarity,
a module operating on the input signal configured to estimate a data polarity,
a logic module, in particular a XOR implementing logic module, configured to check if the pilot polarity and data polarity are equal or different, outputting a polarity information which is used by an output phase discriminator to adjust the value of the carrier phase.

The solution here described refers preferably to FLL usage, i.e., the carrier phase tracking loop is a FLL tracking loop that is enhanced with Direct data bit Decision technique employed on input stream to allow wipeoff of phase change introduced by data bits in order to extend coherent accumulation and is reviewed as alternative method to classical PLL.

In this context, the above solution is particularly effective to obtain a polarity resolution, by the dual packer, i.e. dual polarity detection circuit, which is introduced to resolve Carrier Phase observable Half Cycle Ambiguity on the synthetic pilot signal built in such a way. This allows better performances (sensitivity limit) with respect to state of the art (Geodetic Reference Receiver used as comparison).

The solution here described also may be in particular applied to signals such as Galileo E6-B and BeiDou B2b, which are "DATA-only component" signals, characterized by very high data rate compared to other GNSS signals [1000 symbols x sec, vs 50 bit/s GPS case. A "DATA-only component" signal transmits navigation data without a pilot (or data-free) component. These signals contain navigation messages but do not include an additional pure carrier tracking component that would aid in phase tracking.

As indicated, GNSS classical Tracking schemes for carrier phase delivery are based on PLL tracking loop. Direct Data bit decision is typically used for data download. Tracking sensitivity of the above approach is anyway limited in the case of E6 and B2b because the coherent accumulation is over 1ms only (symbol length) and PLL performances are poor at low C/N0s. Thus, FLL tracking mode is exploited rather than PLL (sensitivity reason) and wipe-off adopted to extend the coherent integration time.

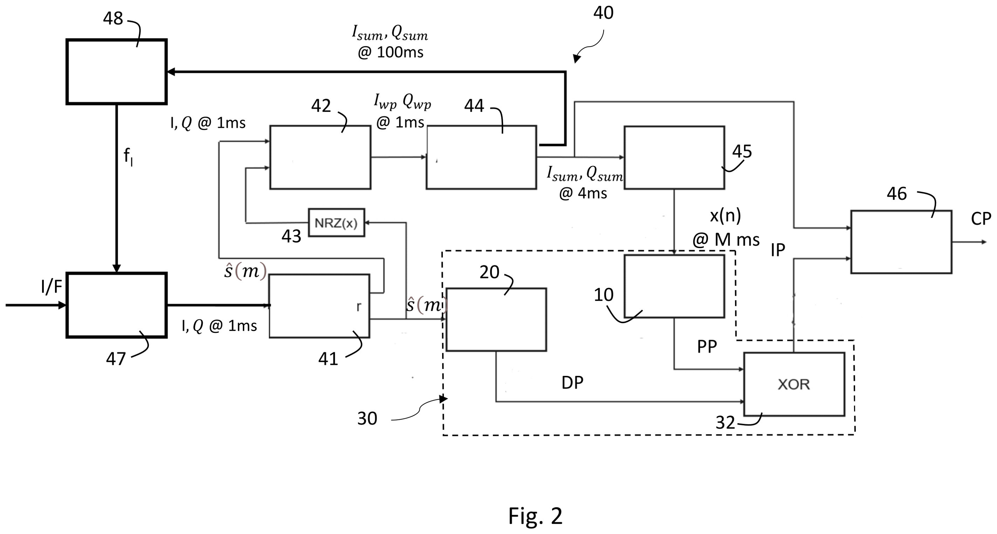

In figure 2 it is a shown a schematics of a circuit comprising a carrier phase tracking loop 40. In this simplified schematics, it is shown a block 47, which receives an input satellite signal sₖ at intermediate frequency, i.e., an intermediate signal I/F. Block 47 is a baseband block which receives the intermediate frequency signal I/F and a local carrier frequency fₗ, then performs the generation of in-phase and quadrature components I,Q as output of the one or more correlators in block 47. The block 47 may be configured to perform other functions of the tracking channel, including thus also code tracking loop portions of the tracking channel TRKₖ, e.g. code tracking. For the purpose of describing the solution here, it is made reference to in-phase and quadrature components, i.e., accumulated coherent GNSS signal components, I, Q, corresponding to a signal x, coming from an elementary prompt correlator, e.g., in said block 47 - which performs correlation on the intermediate frequency signal I/F of an input satellite signal sₖ - which enter a bit estimator 41. Block 47 may in embodiment include the prompt correlator of the tracking channel.

Thus in figure 2 such carrier phase tracking loop 40 includes a bit estimator 41 operating on the elementary prompt correlator outputs, i.e., accumulated coherent integrations, I,Q,, corresponding in particular to the correlation with a prompt PRN sequence, i.e. punctual, i.e. not early or late, which are issued with a given period, e.g. every 1 ms. The bit estimator 41 supplies its output, an Elementary symbol estimate s(n), or data bit, to a data packer 20 and also it supplies the Elementary symbol estimate s(n) to a NRZ encoder 43, which then NRZ encoded output is fed to a data wipe off block 42, configured to perform the wipe off of data from the NRZ encoded output in order to perform the computation of the synthetic pilot stream. Also the elementary prompt correlator outputs, accumulated coherent GNSS signal components I,Q are sent to the data wipe-off block 42.

In general the carrier phase tracking loop 40 operates with a loop filter 48 with an NCO which feeds the local carrier frequency fₗ to the block 47, to be used in the code tracking loop, e.g., to be mixed with the input signal I/F from the acquisition block 4. The carrier phase tracking loop 40 thus is configured to output both the phase CP values and feeding the frequency error estimation back to control a numerical controlled oscillator in block 48 which generates the local carrier frequency to be mixed with the input signal from the acquisition block 4. As mentioned the portion regarding the code tracking block is substantially represented by block 47, which, as per se known, in general performs the correlation both for the code tracking and carrier tracking, for the carrier tracking usually only the prompt correlator output, i.e., I,Q, being used, while early and delay correlation are usually used for the code tracking loop.

Thus, data Symbol estimates *ŝ*(*m*)are executed on elementary prompt correlator outputs (*I,Q*) *@* 1 *kHz.* i.e., every millisecond, by block 41. Such estimates *ŝ*(*m*) are then used to build a "synthetic pilot signal" removing phase changes across consecutive M symbols. Thus, the bit estimator 41 is configured to compute, m being the symbol index: $\hat{s} \left(m\right) = sign \left(I\left(m\right)∗I\left(m-1\right)+Q\left(m\right)∗Q\left(m-1\right)\right)$ i.e., the bit estimate is the sign of the sum of the products of the In-phase and quadrature accumulated coherent values, *I*(*m*)*,Q*(*m*) with their previous value, *I*(*m* - 1), *Q*(*m* - 1)), i.e., in the previous bit interval. This type of bit estimation with maximum likelihood evaluation (decision) is known per se, and other variant of bit estimation can be used.

In the wipe-off 42 is performed a carrier wipe off using the elementary prompt correlator outputs (*I,Q*) and the NRZ encoded estimates *ŝ*(*m*)*.* In particular the wipe-off block 42 outputs the product **ŝ(*m*)(*I*(*m*) *+ jQ*(*m*)** of the elementary prompt correlator outputs **(*I,Q*)** by the NRZ-encoded bit estimate, removing the data bit effect.

Then, a coherent accumulation 43 over a period M longer than the period of accumulation of the the elementary prompt correlator outputs **(*I,Q*)** is performed, e.g. M=4, period is 4 ms on the output **ŝ(*m*)(*I*(*m*) +*jQ*(*m*)** of the data wipe-off block 42. Therefore a synthetic pilot signal x(n), where n is its symbol index i.e., a wiped off M millisecond synthetic pilot, is obtained as: $x \left(n\right) = {x}_{I} \left(n\right) + {jx}_{Q} \left(n\right) = {\sum }_{m = n M}^{\left(n+1\right) M - 1} \hat{s} \left(m\right) \left(I\left(m\right)+jQ\left(m\right)\right)$

As shown, the summation of the output of the wipe off 42 is performed over each symbol m of product ***ŝ*(*m*)(*I*(*m*) + *jQ*(*m*)*,*** from nM to (n+1) M, i.e., each n-th symbol of x(n) is calculated over M symbols of the wipe off 42 output ***ŝ*(*m*)(*I*(*m*) *+ jQ*(*m*).**

This synthetic pilot signal x(n) is then adopted to track signal and derive High Sensitivity Carrier Phase Observable.

This leads to tracking performance improvement and higher quality for the above-mentioned observable.

In figure 2 the accumulator 44 outputs accumulated values Iₛᵤₘ, Qₛᵤₘ, corresponding to ***x_{I}*(*n*)*+jx_{Q}*(*n*).** Such accumulated values Iₛᵤₘ, Qₛᵤₘ are sent to a line level estimator 45, which outputs the synthetic pilot stream x(n)to a pilot packer 10. Using a line level estimator, e.g., a sign detector (-1/1)), to obtain a synthetic pilot stream, is a technique known per se. And are also sent to a carrier phase engine 46, i.e. which is part of the overall carrier phase tracking loop, configured to compute a carrier phase CP, i.e. a carrier phase computing module. The data packer 20 and pilot packer 10 send their outputs, polarity references DP, PP to a logic circuit implemented by a XOR logic circuit 32, which outputs a polarity information IP, as described below, to the carrier phase engine 46, receiving also the accumulated values Iₛᵤₘ, Qₛᵤₘ at 4 ms, e.g., to a lower frequency, M times, than the frequency of the elementary prompt correlator outputs ***(I,Q),*** which uses it to solve the HCA in the phase discriminator and outputs the correct carrier phase CP. The carrier phase CP is then used to compute the phase change between successive coherent integration periods and then a frequency estimator of the FLL tracking uses the phase differences to estimate frequency error. This latter blocks downstream the carrier phase engine 46 and used to obtain the local carrier frequency (also for the code tracking) as said, are not shown in figure 1.

The loop filter 48 in general receives from the accumulator 44 accumulated values Iₛᵤₘ, Qₛᵤₘ at 100 ms, i.e., with a longer period with respect to accumulated values Iₛᵤₘ, Qₛᵤₘ at 4 ms fed to the carrier phase engine 46. The loop filter 48 substantially comprises a frequency discriminator and then it is structured as to determine a second order frequency loop, where a NCO at the output of the loop filter 48 gives the local frequency to the block 47. The loop filter 48 thus operates in a loop which involves substantially the prompt correlator output I,Q, the accumulator 44 and the loop filter 48 generating the local carrier frequency back for the block 48 generating such prompt correlator output I,Q. Block 48 after the frequency discriminator for instance can provide an integral path and a proportional path in parallel, which are the summed. Other module as summation blocks with delay line to stabilize or a loop gain amplifier can be provided.

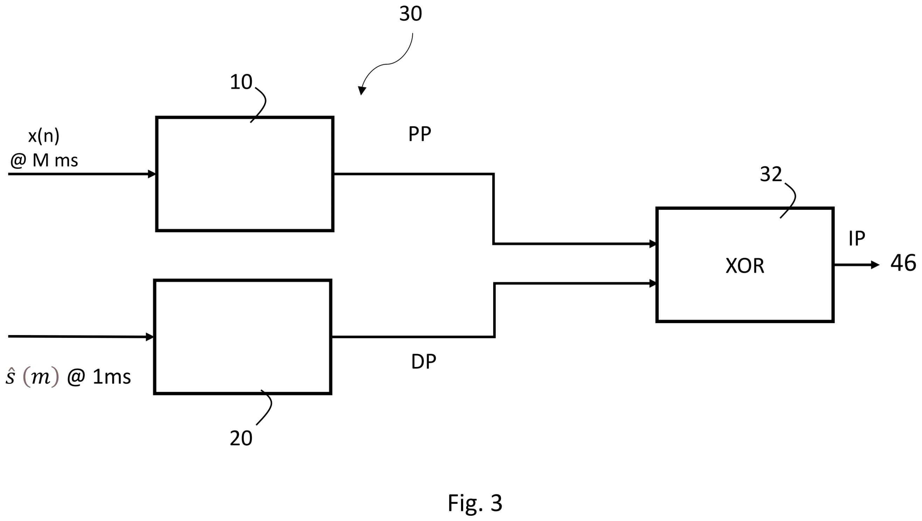

In figure 3 it is shown a simplified schematics illustrating a module 30 configured for the calculation of the polarity information IP. The synthetic pilot stream ***x(n)*** is sent to the pilot packer 10, outputting the pilot polarity PP, and the data bit stream, x(n), is sent to the data packer 20, outputting the data polarity DP. Finally, a XOR 32 of the reference polarity PP from the pilot packer 10 and the reference polarity DP from the data packer 20 is assumed as Polarity information IP, for e.g. E6-B2b carrier phase CP output, which is sent to a carrier phase engine CP alongside.

It is underlined that the pilot packer 10, as detailed below, is operating on a synthetic pilot stream x(n) which has period of M milliseconds, i.e., M times the input elementary prompt correlator outputs, ***I,Q,*** and the corresponding bit estimate ***ŝ*(*m*)*.*** Thus it is utilized a pilot signal with a higher period or lower frequency than the elementary prompt correlator outputs ***I,Q*** which is put in XOR with a signal, the bit estimate ***ŝ*(*m*),** with the same frequency, higher than x(n), of the elementary prompt correlator outputs ***I,Q,*** thus outputting a polarity information IP at such higher frequency.

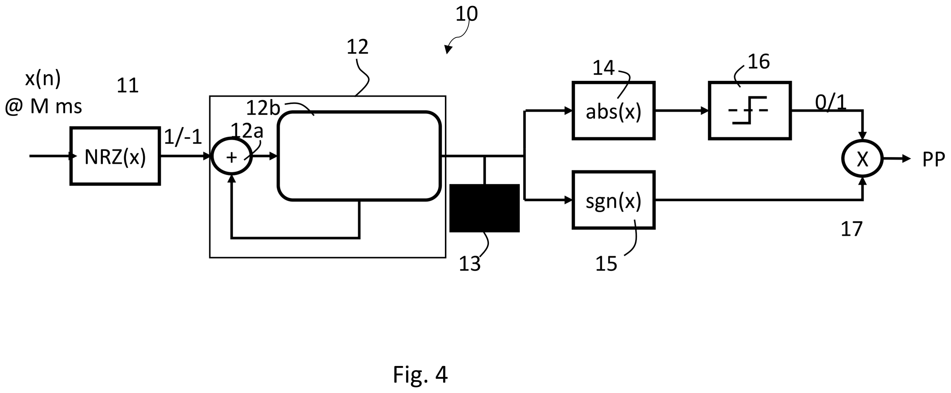

The carrier phase computing module, e.g. 46, in figure 4, receives the pilot polarity PP and the polarity information IP at higher frequency, and based on the value by the polarity information IP, depending on the chosen value convention, e.g. can decide if maintaining the value of the carrier phase CP or rotate it of 180 degrees, operating at the higher frequency of the elementary prompt correlator outputs ***I,Q.*** Therefore, the solution here described allows to operate obtaining a polarity information on the pilot, at lower frequency, with a higher sensitivity, but the polarity information IP is obtained by a combination (XOR) with the data polarity DP at higher frequency, e.g. 1 ms.

The net advantage is that the HCA detection, once achieved, has the sensitivity of the Pilot Packer 10 that exploits the processing gain integration, so is more robust with respect to the "data-only component" solution.

In figure 3 is then detailed the operation of the pilot packer 10.

The operation relies on the observation that the synthetic pilot signal x(n) is expected to be a constant signal level equal to 1 or -1 in ideal condition. So, it has its own "polarity".

To derive such polarity, the synthetic pilot stream x(n) is sent every M milliseconds to the dedicated pilot packer 10 to estimate a candidate polarity counting the number of consecutive 0/1 and declaring DIRECT/INVERSE reference polarity when the counter exceed a pre-defined threshold.

In figure 3 thus a block schematics of the pilot packer 10 is shown, where a signal x(n), the Synthetic Pilot stream, sent every M milliseconds, is brought as input of a NRZ (Non Return To Zero) encoding block 11, which outputs a NRZ encoded signal having positive +1 or negative -1 values depending on the binary logic level of the input signal x(n). Such NRZ encoded signal is brought as input to a counter block 12 comprising a loop comprising a pilot bit count accumulator 12b, which value is brought back to sum in a summation block 12a with the NRZ encoded signal. Therefore blocks 12a and 12b implement an integrator, or cumulative sum, with an output value which is a running total of all past NRZ values while continuously adding new ones. The current value of the output value of the counter 12 is indicated by the label 13, and it can be stored in a block, e.g. register. This value can be used for reset operations, e.g. reset the level estimator if a change in the accumulated sign occurs because of bad tracking.

The output of the counter 12 is brought in parallel to an absolute value computation block 14 which outputs an absolute value abs(x) of the counter 12 output and to a sign value computation block 15 which outputs a sign sgn(x) of the value of the counter 12 output. The absolute value abs(x) is brought to a threshold comparator 16 with a given threshold, which value is in particular settable, which outputs a binary comparison signal, which is multiplied with the output of the sign value computation block 15 in a multiplication block 17. The output of the multiplication block is a polarity indication, which is then evaluated as follows, if it is zero means not detected, if it is +1 means DIRECT refence polarity and if it is -1 INVERSE reference polarity. A binary value the pilot parity, or reference, PP is obtained from this polarity indication, which is e.g. zero for direct reference polarity, one for inverse reference polarity.

When the outcome is 'not detected' this may be signalled, e.g. by setting a flag, so that is not taken in account. Analogous considerations may be applied to the data packer 20.

This polarity indication PP is anyway not sufficient to establish the polarity of the original input E6-B2b signal (1KHz symbol rate) because it refers to the synthetic version and does not reflect in general the one of E6-B2b Input.

Therefore a procedure to link the Synthetic Pilot Polarity PP to the input signal, e.g., estimate **ŝ(*m*),** is performed, in which:
- a second packer is introduced, that is fed by the original data bit decisions, e.g., estimate **ŝ(*m*),** for E6-B2b stream (before wipe-off).
- a synchronization on known sequences (B2b, E6 have their own preamble) is searched in the packer 10.

The sign of such alignment (direct - reverse alignment to a preamble) is retrieved.

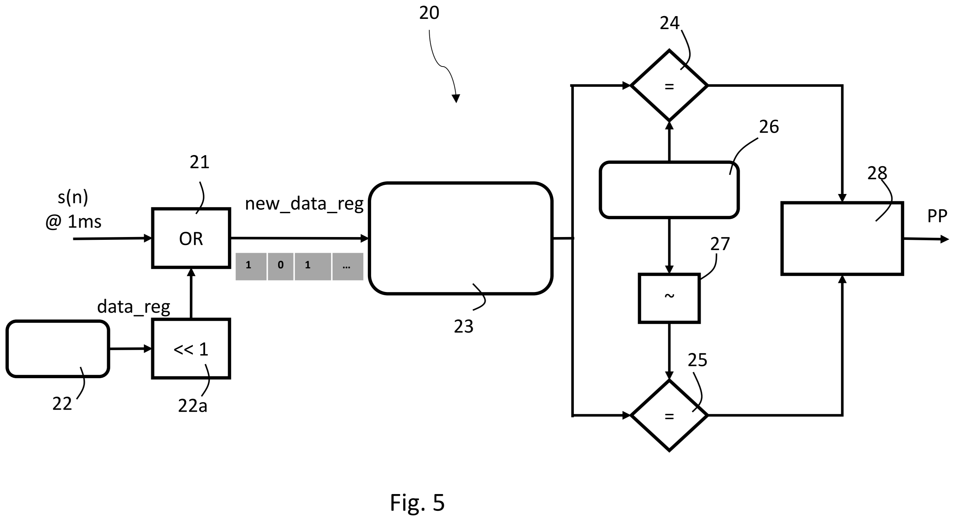

In figure 5, it is shown such second packer 20, in which the Elementary symbol estimate e.g., estimate **ŝ(*m*)** (every 1ms) is sent to an OR block 21 which performs a logic OR with the binary content data_reg of a data register 22, which is then shifted left in a block 22 performing a <<1 binary, function. The function of block 22 is to leave the most recent symbols in the register, which may be a shift register, always on the right of it, so that the last portion of the register contains only the last bits where the preamble is, e.g. last 16 bits of the E6B preamble 0xEB9. Data register 22 may be initialized, e.g. with a zero. A window may be then applied on these last 16 bits to check only such bits versus a known preamble sequence, as discussed below. The output of the OR 21 represents a new data register value, new_data_reg, which is then stored in the data register 22 in a block 23. The new data register value new_data_reg is sent in parallel to a direct polarity verification block 24 and inverse polarity verification block 25 which receive each a sequence preamble 26, i.e. the preamble of the satellite, signal, e.g. B2b, E6, and look for an alignment with the new register data new_data_reg. A block 27 indicates the negation of preamble 26 to check the alignment in the inverse polarity verification block 25. In block 24 the output of this alignment detection is zero or one, which indicates if it is not detected or identified as direct reference polarity respectively. In block 25 the output is zero or minus one, which indicates if it is not detected or identified as inverse reference polarity respectively. An output block 28, which can be a logic block, outputs a signal indicating if the result of the packer 20 is zero, one or minus one, i.e., not detected, direct or inverse reference data polarity. As mentioned, output 28 goes to XOR 32, with the result of the packer 20 as binary, e.g. 0 direct, 1 inverse polarity PP while the 'not detected' can raise a flag, in order to skip the polarity information or to declare it ambiguous.

Thus, based on the above, the solution here described refers to a GNSS receiver receiving at least a satellite signal, e.g., s₀, ..., s_{NS-1} transmitted from a satellite, e.g., one in the set of satellites S₀,...,S_{NS-1}, comprising at least a tracking channel, e.g., one of the tracking channel TRK₀...TRK_{NS-1}, comprising a carrier phase tracking loop, e.g., 40, which is configured to perform a carrier phase, e.g., CP calculation on the basis of accumulated coherent GNSS signal components, e.g., the comp I,Q derived from said at least a satellite signal, e.g., S₀,...s_{NS-1} by a phase discriminator circuit, e.g., the module not shown in its entirety comprising the carrier phase computing module 46, configured to receive an information, e.g., PP, IP on the polarity of said accumulated coherent GNSS signal components, e.g., I,Q, in particular from a prompt correlator correlating the PRN sequences, and to adjust said carrier phase, e.g., CP as a function of said information on the polarity, e.g., PP, IP of said accumulated coherent GNSS signal components, e.g., I,Q,
wherein said GNSS receiver comprises a circuit arrangement, e.g., 41, 42, 43, 44, 45 configured to obtain a synthetic pilot signal, e.g., x(n), at a first frequency, to which correspond a first period, from such accumulated coherent GNSS signal components, e.g., I,Q, comprising a module, e.g., 41 configured for obtaining a bit estimate, e.g., **ŝ(*m*),** of said accumulated coherent GNSS signal components, e.g., I,Q at a second frequency higher than said first frequency and corresponding to the frequency of said accumulated coherent GNSS signal components, e.g., I,Q, and
comprising a circuit, e.g., 30 configured to resolve Carrier Phase observable Half Cycle Ambiguity resolution on said synthetic pilot signal, e.g., x(n),
comprising a module, e.g., 10 operating on the synthetic pilot signal, e.g., x(n) configured to estimate a pilot polarity, e.g., PP, a module, e.g., 20 operating on said bit estimate, e.g., **ŝ(*m*)** configured to estimate a data polarity, e.g., DP from said bit estimate, e.g., **ŝ(*m*),**
a logic module, e.g., 32, in particular a XOR implementing logic module, configured to check if said pilot polarity, e.g., PP and data polarity, e.g., DP are equal or different and outputting a corresponding check result, e.g., IP as polarity information, e.g., IP to said carrier phase computing module, e.g., 46,
said carrier phase computing module, e.g., 46 being configured to perform the adjustment of a computed carrier phase value on the basis of said check result, e.g., IP, e.g., to change of 180 degrees the phase value if the check result indicates that the polarity of the pilot is different from the value indicated by the pilot polarity PP.

Also the receiver comprises a wipe-off module, e.g., 42, configured to perform a direct decision on the basis of a NRZ encoding, e.g., 43, of said bit estimate, e.g., **ŝ(*m*),** and said accumulated coherent GNSS signal components, I,Q.

In embodiments the carrier phase tracking loop 40 may comprise a wipe-off module, e.g. 42, configured to perform a direct decision on the basis of a Non Return To Zero, NRZ, encoding, e.g. 43, of said bit estimate, **ŝ(*m*),** and said accumulated coherent GNSS signal components, I,Q, in particular outputting the product of components I, Q, by the NRZ-encoded bit estimate, thereby removing the data bit effect, comprising coupled to the output of the wipe-off module, 42, a module, e.g. 44, configured to perform accumulation over the first period, in particular over a period **M** longer than the elementary accumulation period (e.g., ***M* = 4**ms), obtaining the accumulated values ***I***ₛᵤₘ**, *Q***ₛᵤₘ. Then, a line estimator, e.g., 44, may be provided to obtain said pilot signal x(n).

The module, indicated in the example with 10, operating on the synthetic pilot signal, e.g., x(n) configured to estimate a pilot polarity, PP, is configured to estimate a pilot polarity by a counter module, e.g., 12, which performs a cumulative summation, configured to count the number of consecutive zero and ones, e.g., referred to the signal in binary form, over a time interval, in particular the first period, e.g., 4ms in the example, and indicating direct or inverse polarity for the pilot polarity, PP, if the count exceeds a given threshold.

Such module, e.g., 10 operating on the synthetic pilot signal, e.g., x(n), configured to estimate a pilot polarity, e.g., PP, comprises by way of example a NRZ encoder, e.g., 11, configured to encode said pilot signal, e.g., x(n), and a cumulative summation block, e.g., 12, configured to compute a cumulative sum of said NRZ encoded pilot signal, e.g., x(n) NRZ encoded, and a module, corresponding e.g.to the set of sub-blocks 14, 15, 16, 17, configured to compare the output of said cumulative summation block, 12, to said given threshold, in particular by calculating in parallel an absolute value and sign of said output of said cumulative summation block, 12, comparing the absolute value to said given threshold and multiplying the comparison output by said sign of said output of said cumulative summation block, 12.

The module, indicated in the example with 20, operating on said bit estimate, e.g., **ŝ(*m*),** configured to estimate a data polarity, DP, from said bit estimate, e.g., **ŝ(*m*),** is configured to search an alignment of said bit estimate, e.g., **ŝ(*m*),** on known sequences, in particular preamble sequence of the satellite signals 26, of said at least a satellite signal, e.g., among signals s₀,...,s_{NS-1}, and to detect a sign of such alignment, if found, if it is not found in embodiments it is indicated that the polarity is not detected, which indicates at least direct or inverse polarity as data polarity, DP.

Such module, e.g., module 20,, e.g., **ŝ(*m*),** configured to estimate a data polarity, DP, from said bit estimate, e.g., **ŝ(*m*),** comprises for instance a direct polarity verification block, e.g., 24, and an inverse polarity verification block, e.g., 25, which are coupled in parallel to said bit estimate e.g., **ŝ(*m*),** i.e. receive it as input in parallel to both blocks, and receive each a sequence preamble, 26, of the at least a satellite signal, e.g., s₀,...,s_{NS-1}, and verify the alignment of said bit estimate e.g., **ŝ(*m*),** to said sequence preamble, 26 outputting a respective indication of detected alignment or not detected alignment, said module, 20, being configured, e.g., by the output block 28, on the basis of the outputs of the direct polarity verification block, 24, and inverse polarity verification block, 25, to indicate as output at least direct or inverse reference data polarity as data polarity.

The receiver of the solution according to embodiments introduces the parallel polarity detection by blocks 10 and 20 in a receiver structure which comprises coupled to the output of the wipe-off module 42, as mentioned a direct decision wipe-off, a module, e.g. 43, configured to perform accumulation over the first period, e.g., the inverse of the first frequency, thus in the example 1ms and 1 KHz, and a line estimator, e.g. estimating the level of the signal, for instance a low pass filter, 44, to obtain said pilot signal x(n).

According to another relevant aspect of the solution, the carrier phase tracking loop, e.g., 40, comprises a loop filter, e.g. 48, comprising a frequency discriminator, in particular said carrier phase tracking loop with said loop filter, e.g. 48, being a second order frequency loop, i.e. the loop filter 48 comprises a frequency discriminator and components, e.g., an integration path and a proportional path, to determine that the whole loop feeding back the local carrier frequency fₗ behaves as a second order loop.

As explained, the at least a satellite signal, e.g. S₀,...,s_{NS-1}, is a data only component signal, in particular a Galileo E6 or BeiDou B2b signal In general, the satellite signal may be any DATA-only component signals, characterized by very high data rate compared to other GNSS signals (e.g., 1000 symbols x second, vs 50 bit/s GPS case), although of course the receiver may operate with any other satellite signal on which is able to perform the carrier phase computation.

From the above description are clear the advantages of the solution.

The solution, by proposing a more effective HCA resolution, allows Carrier Phase Observable Availability at low Cn0s, in particular for data only components signals such as E6 and B2b-PPP, and also, e.g., in B2B, ACEBOC, carrier phase CP derivation at low Cn0s.

The solution refers also to a tracking channel with a carrier phase tracking loop which uses FLL tracking and direct decision in the wipe off exploited to build a Synthetic Signal that is then used to derive Carrier Phase.

Without prejudice to the underlying principles, the details and the embodiments may vary, even significantly, with respect to what has been described by way of example only without departing from the scope of the embodiments.
The extent of protection is determined by the annexed claims.

## Claims

1. A GNSS receiver receiving at least a satellite signal (s₀,...,s_{NS-1}) transmitted from a satellite (S₀,...,S_{NS-1}), comprising at least a tracking channel (TRK) comprising a carrier phase tracking loop (40) which is configured to perform a carrier phase (CP) calculation on the basis of accumulated coherent GNSS signal components (I,Q) derived from said at least a satellite signal (s₀,...,s_{NS-1}) by a phase computation module (46) configured to compute said carrier phase (CP) and to receive an information (PP, IP) on the polarity of said accumulated coherent GNSS signal components (I,Q), adjusting the value of said carrier phase (CP) as a function of said information on the polarity (PP, IP) of said accumulated coherent GNSS signal components (I,Q),
wherein said GNSS receiver comprises a circuit arrangement (41, 42, 43, 44, 45) configured to obtain a synthetic pilot signal (x(n)) at a first frequency and with a first period from said accumulated coherent GNSS signal components (I,Q), comprising a module (41) configured for obtaining a bit estimate **(ŝ(*m*))** of said accumulated coherent GNSS signal components (I,Q) at a second frequency higher than said first frequency and corresponding to the frequency of said accumulated coherent GNSS signal components (I,Q), and
comprising a circuit (30) configured to resolve Carrier Phase observable Half Cycle Ambiguity resolution on said synthetic pilot signal (x(n))
comprising a module (10) operating on the synthetic pilot signal (x(n)) configured to estimate a pilot polarity (PP), a module (20) operating on said bit estimate **(ŝ(*m*))** configured to estimate a data polarity (DP) from said bit estimate **(*ŝ*(*m*)),**
a logic module (32), in particular a XOR implementing logic module, configured to check if said pilot polarity (PP) and data polarity (DP) are equal or different and outputting a corresponding check result (IP) as polarity information (IP) to said phase computation module (46),
said phase computation module (46) being configured to perform the adjustment of a computed carrier phase value on the basis of said check result (IP).

2. Receiver according to claim 1 wherein it comprises a wipe-off module (42) configured to perform a direct decision on the basis of a Non Return To Zero, NRZ, encoding (43) of said bit estimate (ŝ(*m*)) and said accumulated coherent GNSS signal components (I,Q).

3. Receiver according to any of the previous claims, wherein said module (10) operating on the synthetic pilot signal (x(n)) configured to estimate a pilot polarity (PP) is configured to estimate the pilot polarity (PP) by a counter module (12) configured to count the number of consecutive zero and ones over a time interval, in particular the first period, and indicating direct or inverse polarity for the pilot polarity (PP) if the count exceeds a given threshold.

4. Receiver according to any of the previous claims, wherein said module (10) operating on the synthetic pilot signal (x(n)) configured to estimate a pilot polarity (PP) comprises a NRZ encoder (11) configured to encode said pilot signal (x(n)) and a cumulative summation block (12) configured to compute a cumulative sum of said NRZ encoded pilot signal (x(n)) and a module (14, 15, 16, 17) configured to compare the output of said cumulative summation block (12) to said given threshold, in particular by calculating in parallel an absolute value and sign of said output of said cumulative summation block (12), comparing the absolute value to said given threshold and multiplying the comparison output by said sign of said output of said cumulative summation block (12).

5. Receiver according to any of the previous claims, wherein said module (20) operating on said bit estimate **(ŝ(*m*))** configured to estimate a data polarity (DP) from said bit estimate **(ŝ(*m*))** is configured to search an alignment of said bit estimate **(ŝ(*m*))** on known sequences (26) of said at least a satellite signal (s₀,...,s_{NS-1}), in particular a preamble sequence, and to detect a sign of such alignment, if found, which indicates direct or inverse polarity as data polarity (DP).,

6. Receiver according to any of the previous claims, wherein said module (20) operating on said bit estimate **(ŝ(*m*))** configured to estimate a data polarity (DP) from said bit estimate **(ŝ(*m*))** comprises a direct polarity verification block (24) and inverse polarity verification block (25) which are coupled in parallel to said bit estimate **(ŝ(*m*))** and receive each a sequence preamble (26) of the at least a satellite signal (s₀,...,s_{NS-1}) , and verify the alignment of said bit estimate **(ŝ(*m*))** to said sequence preamble (26) outputting a respective indication of detected aligment or not detected aligment, said module (20) being configured (28) on the basis of the outputs of the direct polarity verification block (24) and inverse polarity verification block (25) to indicate as output at least direct or inverse reference data polarity as data polarity.

7. Receiver according to any of the previous claims, wherein it comprises coupled to the output of the wipe-off module (42) a module (44) configured to perform accumulation over the first period and a line estimator (44) to obtain said pilot signal (x(n):

8. Receiver according to any of the previous claims, wherein said carrier phase tracking loop (40) comprises a loop filter (48) comprising a frequency discriminator, in particular said carrier phase tracking loop with said loop filter (48) being a second order frequency loop.

9. Receiver according to any of the previous claims, wherein said at least a satellite signal (s₀,...,s_{NS-1}) is a data only component signal, in particular a Galileo E6 or BeiDou B2b signal.

10. A method for performing a carrier phase tracking in a GNSS receiver according to any of claims 1 to 9, comprising receiving at least a satellite signal (s₀,...,s_{NS-1}) transmitted from a satellite (S₀,...,s_{NS-1}), performing a carrier phase (CP) calculation on the basis of accumulated coherent GNSS signal components (I,Q) derived from said at least a satellite signal (s₀,...,s_{NS}-₁) by a performing phase computation (46) and to adjust said carrier phase (CP) as a function of said information on the polarity (PP, IP) of said accumulated coherent GNSS signal components (I,Q),
further comprising obtaining (41, 42, 43, 44, 45) a synthetic pilot signal (x(n)) at a first frequency from said accumulated coherent GNSS signal components (I,Q), obtaining a bit estimate **(ŝ(*m*))** of said accumulated coherent GNSS signal components (I,Q) at a second frequency higher than said first frequency and corresponding to the frequency of said accumulated coherent GNSS signal components (I,Q), and
resolving (30) Carrier Phase observable Half Cycle Ambiguity resolution on said synthetic pilot signal (x(n)) by
estimating (10) a pilot polarity (PP),
estimating (20) a data polarity (DP) from said bit estimate **(ŝ(*m*))** ,
checking (32) if said pilot polarity (PP) and data polarity (DP) are equal or different and outputting a corresponding check result (IP) as polarity information (IP),
performing the adjustment of a computed carrier phase value on the basis of said check result (IP).

11. Computer program product directly loadable into the internal memory of a digital computer, comprising software code portions for performing the steps of the method of any of claims 1 to 10.
